# EUROPEAN PATENT APPLICATION

(11) **EP 3 951 662 A1**
(43) Date of publication of application: **09.02.2022**
(21) Application number: 21769328.2
(22) Date of filing: 04.03.2021
(51) Int. Cl.: G06N 3/063

(54) **ALL-ON-CHIP STORAGE NEURAL NETWORK ACCELERATOR AND IMPLEMENTATION METHOD THEREFOR**

(30) Priority: 08.06.2020 CN 202010512394
(71) Applicant: REEXEN TECHNOLOGY CO., LTD., Shenzhen, Guangdong 440304 (CN)
(72) Inventor: CHEN, Qiaoqiao, Shenzhen, Guangdong 518100 (CN); LIU, Hongjie, Shenzhen, Guangdong 518063 (CN)
(74) Representative: Stellbrink & Partner Patentanwälte mbB
(86) International application number: PCT/CN2021/079003
(87) International publication number: WO 2021/248941

(57) **Abstract**

A method for implementing a neural network accelerator using only on-chip memory is provided. The method includes: according to a current neural network model, determining a layer having a minimum value of an output feature map in a neural network (101); determining a quantity of layers of pipeline computing (102); determining a quantity of PEs used for pipeline computing (103); applying for a PE and storing an output feature map of the last layer of pipeline computing in on-chip memory (104), releasing a PE corresponding to a layer at which pipeline computing is completed (105), and repeating the above process at a layer at which computing is to be performed until pipeline computing is completed at all layers of the entire neural network. A neural network accelerator using only on-chip memory is further provided, including a controller, a loading module, a computing array, a post processing module, a storage module, and an on-chip buffer. The neural network accelerator using only an on-chip memory has lower power consumption, a smaller area, a higher energy efficiency ratio, and real-time and scalable performance.

## Description

### Technical Field

The present disclosure relates to the application field of neural networks, and more specifically, relates to a neural network accelerator using only on-chip memory and a method for implementing a neural network accelerator using only on-chip memory.

### Background Art

In the application field of neural networks, implementation of neural network (NN) acceleration on mobile-end hardware aims to achieve lower power consumption and a smaller area and increase an energy efficiency ratio as much as possible while implementing real-time processing.

A paper 1 "UNPU: An Energy-Efficient Deep Neural Network Accelerator With Fully Variable Weight Bit Precision" DOI: 10.1109/JSSC.2018.2865489, a paper 2 "An Energy-Efficient Precision-Scalable ConvNet Processor in 40-nm CMOS" DOI: 10.11 09/JSSC.2016.2636225, a paper 3 "Eyeriss: An Energy-Efficient Reconfigurable Accelerator for Deep Convolutional Neural Networks" DOI: 10.1109/JSSC.2016.26 16357, and a paper 4 "UniWiG: Unified Winograd-GEMM Architecture for Accelerating CNN on FPGAs" DOI: 10.1109/VLSID.2019.00055 all disclose NN accelerators using a single-layer solution. In the single-layer solution, computing is sequentially performed layer by layer in a neural network. For example, computing result of the first layer is stored in an off-chip memory, and the result is moved in from the off-chip memory during computing the second layer. For example, in the accelerator of the paper 3, image data and weight are read from a dynamic random access memory (DRAM) to a buffer and then transmitted to computing array, thereby implementing over-lapping of memory traffic and computing. The computing array computes a convolution of the image data and the weight and generates multiple intermediate addition operation results. The multiple intermediate addition operation results are returned from the array to the buffer, and are not used as intermediate addition operation results that are inputted in computing at the next layer and are not shaped and compressed to the DRAM Remaining intermediate addition operation results are used as intermediate addition operation results that are inputted in computing at the next layer and are stored in the buffer, and then are restored to the array in computing at the next layer. This can implement configurable support for image and weight that are not completely suitable for the array. The neural network accelerator using a single-layer solution mainly has the following disadvantages: (1) reading data from an off-chip double data rate SDRAM (DDR) has the highest power consumption, and the temporary data needs to be repeatedly moved in the single-layer solution, resulting in very high dynamic power consumption; and (2) loading data from off-chip DDR requires a high-speed interface, increasing area and costs.

A paper 5 "Fused-Layer CNN Accelerators" DOI: 10.1109/MICRO.2016.7783 725, a paper 6 "Exploring Heterogeneous Algorithms for Accelerating Deep Convolutional Neural Networks on FPGAs" DOI: 10.1145/3061639.3062244, and a paper 7 "Breaking High-Resolution CNN Bandwidth Barriers With Enhanced Depth-First Execution" DOI: 10.1109/JETCAS.2019.2905361 all disclose NN accelerator using pipeline solution. In the pipeline solution of the existing technologies, if one layer has some computing results, computing may start at the next layer by using the computing results, and computing results of some layers unavoidably need to be stored in off-chip memory. Disadvantages of existing pipeline solutions mainly include: (1) because computing results of some layers still need to be stored in off-chip memory, a high-speed interface is still required and power consumption is still high; (2) if only on-chip memory is used, many memories are required, increasing chip area; (3) the pipeline solution using a pyramid structure has some limitations, where array utilization is not optimal, and sub-optimal [M, N] values are selected only for a single network (where M and N herein are input and output values of a processing element); and (4) most existing pipeline solutions are described based on a field programmable gate array (FPGA), need to be customized for different networks, and are infeasible on an application-specific integrated circuit (ASIC).

In summary, the existing technologies have problems such as high power consumption, large area, inability to ensure real-time performance, difficulty in scalability, and low hardware utilization and computing efficiency of multiplier and accumulator (MAC) array.

Therefore, in the application field of neural networks, a neural network accelerator using only on-chip memory and a method for implementing neural network accelerator using only on-chip memory that have lower power consumption, smaller area, higher energy efficiency ratio, and real-time processing and scalable performance are urgently needed.

### Summary

In view of this, the present disclosure provides a neural network accelerator using only on-chip memory and a method for implementing neural network accelerator using only on-chip memory that have lower power consumption, smaller area, higher energy efficiency ratio, and real-time processing and scalable performance. To achieve the above objective, the present disclosure uses the following technical solutions.

A method for implementing neural network accelerator using only on-chip memory is provided. The method includes the following steps: step 1: according to current neural network model, determining a layer having a minimum value of an output feature map in the neural network; step 2: if the value of an output feature map of the last layer of layers of pipeline computing that can be supported by the processing element to the greatest extent does not exceed the capacity of on-chip memory, using the last layer as the last layer of pipeline computing; if the value of an output feature map of the last layer exceeds the capacity of on-chip memory, using the layer having a minimum value of the output feature map as the last layer of pipeline computing; and determining a quantity of layers of pipeline computing; step 3: according to the quantity of layers of pipeline computing, determining a quantity of processing elements used for pipeline computing, and applying for a processing element; step 4: storing the output feature map of the last layer of pipeline computing in the on-chip memory; and step 5: determining the quantity of layers of pipeline computing according to step 2, applying for the processing element according to step 3, reading the feature map stored in the on-chip memory in step 4 and performing pipeline computing, storing the output feature map of the last layer of pipeline computing in the on-chip memory according to step 4, releasing a processing element corresponding to the layer at which pipeline computing is completed, and repeating the above process until pipeline computing is completed at all layers of the entire neural network.

In this solution, a pipeline computing solution is used. In pipeline computing, computing at the next layer may start without storing an intermediate result between layers. This reduces power consumption caused by storing the intermediate result and reading the intermediate result required for computing at the next layer. Step 2 aims to ensure that the output feature map of the last layer of pipeline computing is not excessively large, and may be stored with a small capacity of an on-chip memory, thereby using only the on-chip memory and effectively reducing power consumption of the NN accelerator and chip area. Using only the on-chip memory means that there is no need to repeatedly move data. Therefore, a high-speed interface required to move data may be omitted, thereby reducing additional power consumption and costs caused by the high-speed interface. In addition, in pipeline computing, omission of the peripheral high-speed interface does not result in operations such as pause or delay, and the method using only on-chip memory in the present disclosure does not affect computing process and does not increase computing time. The present disclosure still ensures real-time data processing performance.

Preferably, the value of the output feature map of the last layer of pipeline computing may not exceed the capacity of the on-chip memory.

Preferably, a processing element that is not used for pipeline computing or that is released may be configured to store a weight that needs to be preloaded at a layer at which computing is to be performed.

Preferably, the minimum value of the output feature map in the neural network may appear at a predetermined layer.

Preferably, layers having minimum values of the output feature map in the neural network may be spaced by a same quantity of layers.

Preferably, if MobileNet-YOLOv3 is used as a neural network model, the layers having minimum values of the output feature map in the neural network may be spaced by three layers.

Preferably, layers having minimum values of the output feature map in the neural network may be spaced by different quantities of layers.

The present disclosure further provides a neural network accelerator using only on-chip memory, including: a controller, configured to send a control instruction to a loading module, a computing array, a post processing module, and a storage module; the loading module, configured to load a feature map and a weight from an on-chip buffer to a computing array according to the control instruction; the computing array, including multiple processing elements, where the computing array receives, according to the control instruction, the feature map and the weight outputted from the loading module, and outputs a computing result to the post processing module or the storage module; the post processing module, configured to: receive the computing result according to the control instruction, perform post processing, and output a processing result to the storage module; the storage module, configured to store an output feature map in an on-chip buffer according to the control instruction, where the output feature map is a computing result or a processing result, and a value of the output feature map does not exceed a storage capacity of the on-chip buffer; and the on-chip buffer, configured to: store the feature map, where after a quantity of layers of pipeline computing and a quantity of processing elements are determined again, a processing element is applied for, the loading module reads the output feature map and a weight in the on-chip buffer to the computing array according to the control instruction delivered by the controller, the storage module stores the computed output feature map in the on-chip buffer according to the control instruction delivered by the controller, a processing element corresponding to a layer at which pipeline computing is completed is released, the above process is repeated until pipeline computing is completed at all layers of the entire neural network, and a final result is outputted.

The neural network accelerator using only an on-chip memory and the method for implementing a neural network accelerator using only an on-chip memory provided in the present disclosure are based on a limited quantity of processing elements and a certain capacity of on-chip memory while considering various factors. When there is a limited quantity of processing elements, a roll-pipeline method is used to complete computing at all layers, and array utilization is optimal. In addition, if a value of an output feature map of the last layer of layers of pipeline computing that can be supported by a processing element to the greatest extent exceeds a capacity of an on-chip memory, a layer having a minimum value of the output feature map is used as the last layer of pipeline computing. The output feature map of the last layer of pipeline computing is stored in the on-chip memory, thereby using only on-chip memory to reduce power consumption without increasing chip area. In addition, the present disclosure may achieve global optimization for different networks, and is scalable more easily to satisfy the requirement for a high hash rate.

### Brief Description of the Drawings

FIG. 1 is a schematic flowchart of a method for implementing neural network accelerator using only on-chip memory;
FIG. 2 is a diagram of value distribution of an output feature map in MobileNet-YOLOv3 model;
FIG. 3 is a schematic diagram in which a processing element completes pipeline computing at all layers of an entire network;
FIG. 4 is a schematic structural diagram of a neural network accelerator using only on-chip memory.

**Description of main reference numerals**

| | |
|---|---|
| 40 | Neural network accelerator using only on-chip memory |
| 401 | Controller |
| 402 | Loading module |
| 403 | Computing array |
| 404 | Post processing module |
| 405 | Storage module |
| 406 | On-chip buffer |

### Detailed Description of the Embodiments

One or more embodiments of the present disclosure are described below in detail with reference to the accompanying drawings of the principle of the present disclosure. The present disclosure is described with reference to such embodiments, but the present disclosure is not limited to any embodiment. The scope of the present disclosure is limited only by the claims, and the present disclosure covers many alternatives, modifications, and equivalents. In the following detailed descriptions, many specific details are provided to thoroughly understand the present disclosure. These details are provided for the purpose of example, and the present disclosure may also be implemented according to the claims without some or all of these specific details.

The present disclosure is described in detail below with reference to the accompanying drawings of the specification. The method steps in the present disclosure are only for ease of describing each independent operation, and do not limit the order of operations. In some embodiments, the order of the method steps may be adjusted, or other method steps may be added.

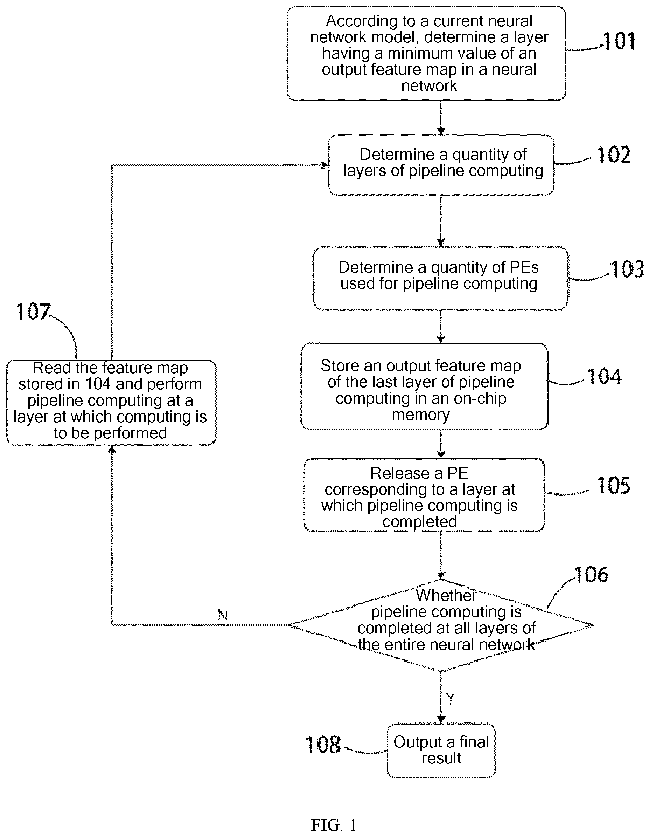

Referring to FIG. 1, FIG. 1 is a schematic flowchart of a method for implementing a neural network accelerator using only on-chip memory.

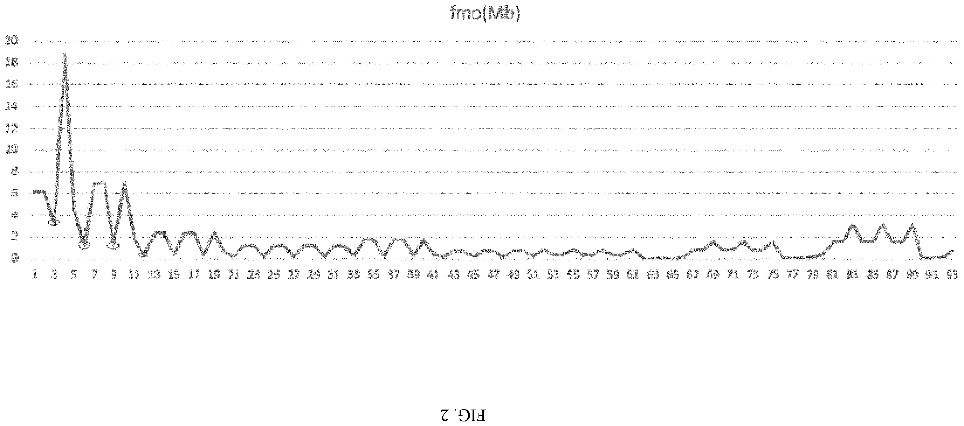

The present disclosure provides a method for implementing a neural network accelerator using only on-chip memory. The method includes 101: According to the current neural network model, determine a layer having a minimum value of an output feature map (FM) in a neural network. In each convolutional layer of the neural network, data exists in a three-dimensional form, and each three-dimensional image is referred to as a feature map. There are several convolutional kernels between layers. All feature maps of a layer of the neural network are convolved with each convolution kernel to generate output feature maps of this layer. This is because in subsequent steps, layers of pipeline computing need to be determined according to a layer having a minimum value of the output feature map in the current neural network model. FIG. 2 is a diagram of value distribution of an output feature map in MobileNet-YOLOv3 model. The horizontal axis represents a layer number (layer NO.), and the vertical axis represents a value of an output feature map (unit: Mb). As can be seen from FIG. 2, the diagram of the value distribution of the output feature map in the MobileNet-YOLOv3 model is a fluctuating curve, and the value of the output feature map decreases every three layers. Layers circled in FIG. 2 are four layers of layers having minimum values of the output feature map in the MobileNet-YOLOv3 model. In the present disclosure, a layer having a minimum value of the output feature map in the neural network is a layer whose value of the output feature map is at the trough in the diagram of the value distribution of the output feature map of the neural network. Commonly used neural network models also include AlexNet, VGGNet, ResNet, InceptionNet, and the like. For example, the current neural network model is a VGGNet network. In this case, before computing starts, a layer having a minimum value of an output feature map in the VGGNet model needs to be determined, and a subsequent operation is performed accordingly to dynamically allocate a computing resource. It should be noted that in various neural network models, the characteristic that the diagram of the value distribution of the output feature map is a fluctuating curve is common, that is, the output feature map of the neural network has a minimum value at a predetermined layer. In different neural network models, minimum values appear at an interval of different quantities of layers. Layers having minimum values of the output feature maps in some neural network models are spaced by a same quantity of layers. For example, the layers having the minimum values of the output feature map in MobileNet-YOLOv3 are spaced by three layers. Certainly, layers having minimum values of output feature maps in some neural network models are spaced by different quantities of layers.

102: Determine a quantity of layers of pipeline computing. A specific method is: if a value of an output feature map of the last layer of layers of pipeline computing that can be supported by a processing element (PE) to the greatest extent does not exceed the capacity of on-chip memory, using the last layer as the last layer of pipeline computing; or if a value of an output feature map of the last layer exceeds the capacity of on-chip memory, using the layer having a minimum value of the output feature map as the last layer of pipeline computing. The PE is a basic computing unit of the neural network. In pipeline computing, when a partial result starts to be computed at a layer of the neural network, the partial result may be used to start computing at the next layer, that is, the PE computes at multiple layers in the neural network at the same time, and does not need to wait for the final result of a layer to be computed and then start computing of the next layer. Pipeline computing may omit transfer of intermediate data and reduce power consumption of the NN accelerator. If the value of the output feature map of the last layer of layers of pipeline computing that can be supported by a processing element to the greatest extent does not exceed the capacity of the on-chip memory, the last layer is used as the last layer of pipeline computing; or if the value of the output feature map of the last layer exceeds the capacity of the on-chip memory, a layer having a minimum value of the output feature map is used as the last layer of pipeline computing. In this way, when the value of the output feature map of the last layer exceeds the capacity of the on-chip memory, only the on-chip memory may be used based on the characteristic that the output feature map of the neural network has a minimum value at a predetermined layer. It should be noted that when a layer having a minimum value of the output feature map is used as the last layer of pipeline computing, hardware utilization of MAC array should also be considered, that is, a layer that has a minimum value of the output feature map and that may achieve the highest hardware utilization of the MAC array should be selected. Refer to FIG. 2. Assuming that the capacity of the on-chip memory is 3Mb, if the PE can support pipeline computing at layers 1 to 4 to the greatest extent, but a value of an output feature map of the layer 4 is about 19Mb and exceeds the capacity of the on-chip memory, pipeline computing is performed at layers 1 to 3 and an output feature map of the layer 3 is stored in the on-chip memory. In this case, the storage capacity of the on-chip memory is at least 3Mb. If the PE can support pipeline computing at layers 12 to 17 to the greatest extent, and a value of an output feature map of the layer 17 is about 2.5Mb and does not exceed the capacity of the on-chip memory, pipeline computing is performed at the layers 12 to 17 and an output feature map of the layer 17 is stored in the on-chip memory. The value of the output feature map in MobileNet-YOLOv3 decreases every three layers, and a minimum value of the output feature map appears. Only on-chip memory is used based on this characteristic, so that the capacity of the on-chip memory and the area of the entire chip do not need to be excessively large, and power consumption is also lower. It should be understood that quantities of PEs required for computing at layers are different. When computing at a layer requires many PEs, a maximum quantity of layers at which PEs support pipeline computing decreases. Therefore, a quantity of layers of pipeline computing changes.

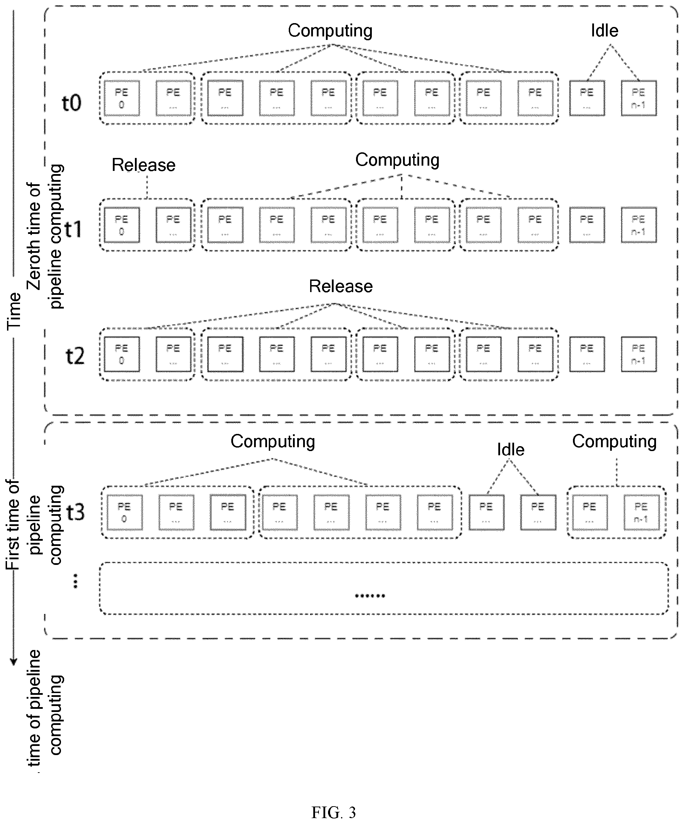

103: Determine a quantity of PEs used for pipeline computing. A specific method is to apply for a PE according to the quantity of layers of pipeline computing. Corresponding PEs are applied for according to the determined quantity of layers of pipeline computing. Not all PEs are used for pipeline computing, and some PEs may be in an idle state. Further, to avoid waste of a computing resource, the PEs in the idle state may be used to store the weight that needs to be preloaded at a layer at which computing is to be performed. This can further reduce bandwidth requirement and improve hardware utilization and computing efficiency of the MAC array. As shown in FIG. 3, the vertical axis represents a time, and the horizontal axis represents state changes of n PEs. From a moment t0 to a moment t2, the zeroth time of pipeline computing is performed, that is, pipeline computing is performed at multiple layers in the neural network. At the moment t0, most PEs are in a computing state and a small part of PEs are in the idle state, and the PEs in the idle state may store the weight that needs to be preloaded at a layer at which computing is to be performed. At the moment t1, a small part of PEs that are in the computing state at the moment t0 are in a released state after completing computing, and may also store a weight that needs to be preloaded at a layer at which computing is to be performed, and other PEs still maintain the state at the moment t0. At the moment t2, all PEs in the computing state at the moment t1 complete computing and are in the released state, and immediately store a weight that needs to be preloaded at a layer at which computing is to be performed and wait for the first time of pipeline computing. At the moment t3, the first time of pipeline computing starts. The PEs that maintain the idle state during the zeroth time of pipeline computing switch to the computing state. Most PEs that are in the released state at the moment t2 also switch to the computing state, and a small part of PEs that are in the released state at the moment t2 switch to the idle state and always maintain the idle state during the first time of pipeline computing. As can be seen from FIG. 3, a state of a PE depends on a quantity of PEs determined according to the quantity of layers of pipeline computing.

104: Store the output feature map of the last layer of pipeline computing in the on-chip memory. It should be noted that the value of the output feature map of the last layer of pipeline computing does not exceed the capacity of the on-chip memory. Otherwise, only on-chip memory cannot be used. Data of the output feature map needs to be moved to and stored in an off-chip DDR, which increases power consumption of the NN accelerator. For example, a minimum value of an output feature map of a certain network that does not exceed the capacity of the on-chip memory appears only at a layer 10. Ideally, PEs may perform pipeline computing at these ten layers. Otherwise, it may be necessary to increase PEs or on-chip memories.

Although there are pipeline solutions in the existing technologies, the pipeline solutions do not use the characteristic that the value of the output feature map of the neural network is fluctuating. In most solutions, a result of pipeline computing still needs to be stored in an off-chip DDR, and during the next time of computing, moved and read into chip for computing. If only on-chip memory is used, the on-chip memory needs to be increased. However, if a result of pipeline computing is large or even at a peak, an area occupied by the on-chip memory is very large, resulting in an increase in the area of the chip. However, in the present disclosure, if the value of the output feature map of the last layer of the layers of pipeline computing that can be supported by PEs to the greatest extent exceeds the capacity of the on-chip memory, a layer having a minimum value of the output feature map is used as the last layer of pipeline computing. A small on-chip memory capacity can implement usage of only on-chip memory, and power consumption of the NN accelerator is lower. In addition, it can be ensured that the chip area is small, and this can be applied to various mobile-end devices. In addition, the method of using only on-chip memory in the present disclosure does not require an additional high-speed interface for transmitting intermediate data, which further reduces power consumption and additional costs. Particularly, in all computing, omission of the peripheral high-speed interface does not result in operations such as pause or delay, and the method in the present disclosure does not affect computing process and does not increase computing time, and still ensures real-time data processing performance.

105: Release a PE corresponding to a layer at which pipeline computing is completed. This operation may be executed immediately after the output feature map is stored in the on-chip memory during the initial time of pipeline computing; or may be executed when a PE is applied for in the second time of pipeline computing; or at other moments. It should be noted again that the arrangement of the steps of the method of the present disclosure is only to clarify specific operations and does not specify the order of the steps of the operations, and the order of operations of steps is determined according to specific conditions. All PEs are in the idle state before the initial time of pipeline computing. After PEs used for pipeline computing are determined, some PEs are still in the idle state and may store the weight that needs to be preloaded at a layer at which computing is to be performed. 106: Whether pipeline computing is completed at all layers of the entire neural network. If pipeline computing is not completed at all the layers of the entire neural network, perform 107 of reading the feature map stored in 104 and performing pipeline computing at a layer at which computing is to be performed. That is, the quantity of layers of pipeline computing is determined again according to 102, a PE is applied for according to 103 and pipeline computing is performed, the output feature map of the last layer of pipeline computing is stored in the on-chip memory according to 104, and it is determined again whether pipeline computing is completed at all the layers of the entire neural network. If pipeline computing is completed at all the layers of the entire neural network, perform 108 of outputting a final result. That pipeline computing is completed at a layer means that computing of all feature maps of this layer is completed. For example, it is assumed that pipeline computing is performed at layer 1 and layer 2 at the moment t0. Pipeline computing at the layer 1 is completed at the moment t1, and a PE corresponding to the layer 1 is released and may be used for computing at layer 3 and layer 4 or storing the weight that needs to be preloaded at a layer at which computing is to be performed. Layers of the second time of pipeline computing include the layer 2, the layer 3, and the layer 4. In this case, the layer 4 is a layer having a minimum value of the output feature map. Therefore, the layer 4 is used as the last layer of pipeline computing, and an output feature map of the layer 4 is stored in the on-chip memory. In the present disclosure, if the value of the output feature map of the last layer of the layers of pipeline computing that can be supported by PEs to the greatest extent exceeds the capacity of the on-chip memory, a layer having a minimum value of the output feature map is used as the last layer of pipeline computing, to determine the layers of pipeline computing. PEs used for pipeline computing are determined according to the layers of pipeline computing and are applied for, and the PEs used for pipeline computing are determined. PEs in the idle state and the released state are used to store the weight that needs to be preloaded at a layer at which computing is to be performed. This pipeline in which array resource is dynamically allocated is referred to as a roll-pipeline (RP). As shown in FIG. 3, PEs in the computing state are continuously adjusted according to a change of the quantity of layers of pipeline computing. PEs in the idle state and PEs in the released state after computing is completed may store the weight that needs to be preloaded at a layer at which computing is to be performed, and wait for pipeline computing at a layer at which computing is to be performed. As seen in FIG. 3, the above process is similar to that PEs in the computing state scroll from left to right until pipeline computing is completed at all the layers of the entire network. Pipeline computing based on a pyramid structure in the existing technologies has certain limitations, and array utilization is not optimal. Most existing technologies are described based on a programmable FPGA, and sub-optimal [M, N] values are selected only for a single network (where M and N are an input and an output of a neural network). Array utilization may be optimal in a certain network, but is low in other networks. In addition, customization is required for different networks. Therefore, this is infeasible on an application-specific integrated circuit (ASIC). In the present disclosure, the roll-pipeline method is used to complete pipeline computing at all layers, an array resource is dynamically allocated, array utilization is optimal, and global optimization may be achieved for different networks. To satisfy the requirement for high hash rate, the NN accelerator using only on-chip memory in the present disclosure is scalable more easily.

In summary, in the present disclosure, pipeline computing is performed at as many layers as possible based on limited PEs. In addition, when the value of the output feature map of the last layer of layers of pipeline computing that can be supported by PEs to the greatest extent exceeds the capacity of the on-chip memory, a layer having a minimum value of the output feature map is used as the last layer of pipeline computing, and the output feature map of the last layer of pipeline computing is stored in the on-chip memory. In the present disclosure, NN acceleration is implemented on mobile-end hardware. Power consumption is lower, area is smaller, and energy efficiency ratio is higher while real-time processing is implemented. In addition, hardware utilization and computing efficiency of MAC array are improved. To satisfy the requirement for high hash rate, the accelerator in the present disclosure is scalable easily.

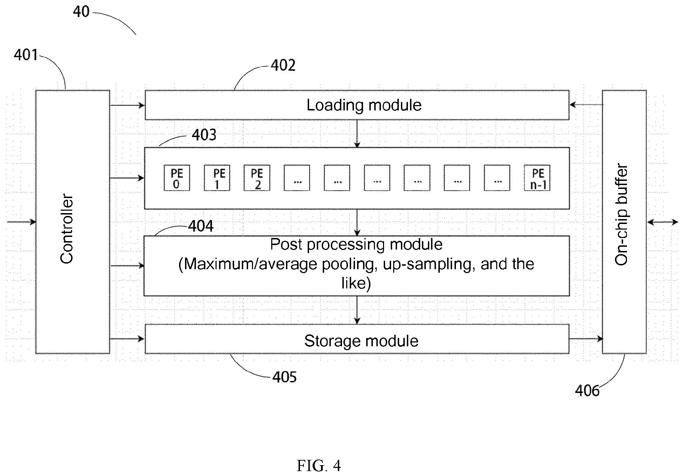

Referring to FIG. 4, FIG. 4 is a schematic structural diagram of a neural network accelerator using only on-chip memory.

The present disclosure further provides a neural network accelerator 40 using only on-chip memory, including: a controller 401, configured to send a control instruction to a loading module 402, a computing array 403, a post processing module 404, and a storage module 405; the loading module 402, configured to load a feature map and a weight from an on-chip buffer 406 to a computing array 403 according to the control instruction; the computing array 403, including multiple PEs, where the computing array 403 receives, according to the control instruction, the feature map and the weight outputted from the loading module 402, and outputs a computing result to the post processing module 404 or the storage module 405; the post processing module 404, configured to: receive the computing result according to the control instruction, perform post processing (PP), and output a processing result to the storage module 405, where post processing includes maximum/average pooling (max/average-pooling), up-sampling, and the like; the storage module 405, configured to store an output feature map in an on-chip buffer 406 according to the control instruction, where the output feature map is a computing result or a processing result, and a value of the output feature map does not exceed a storage capacity of the on-chip buffer 406; and the on-chip buffer 406, configured to: store the feature map, where after a quantity of layers of pipeline computing and a quantity of processing elements are determined again, data in the on-chip buffer 406 is read to the loading module 402, a PE is applied for, the loading module 402 reads the output feature map and a weight in the on-chip buffer 406 to the computing array according to the control instruction delivered by the controller, the storage module 405 stores the computed output feature map in the on-chip buffer 406 according to the control instruction delivered by the controller, a PE corresponding to a layer at which pipeline computing is completed is released, the above process is repeated until pipeline computing is completed at all layers of the entire neural network, and a final result is outputted.

It should be noted that, in the above embodiment, modules included are only differentiated according to functional logic, but are not limited to the above differentiation, as long as corresponding functions can be implemented. In addition, specific names of functional units are for ease of distinguishing each other, are not used to limit the protection scope of the present disclosure, and cannot be understood as specific devices.

The above described are merely preferred embodiments of the present disclosure, and are not intended to limit the present disclosure. Any modification, equivalent substitution and improvement without departing from the spirit and principle of the present disclosure shall be included within the protection scope of the present disclosure.

## Claims

1. A method for implementing a neural network accelerator using only on-chip memory, wherein the method comprises:
Step 1: according to a current neural network model, determining a layer having a minimum value of an output feature map in a neural network;
Step 2: if a value of an output feature map of a last layer of layers of pipeline computing that can be supported by a processing element to the greatest extent does not exceed a capacity of an on-chip memory, using the last layer as the last layer of pipeline computing; if a value of an output feature map of the last layer exceeds a capacity of an on-chip memory, using a layer having a minimum value of the output feature map as the last layer of pipeline computing; and determining a quantity of layers of pipeline computing;
Step 3: according to the quantity of layers of pipeline computing, determining a quantity of processing elements used for pipeline computing, and applying for a processing element;
Step 4: storing the output feature map of the last layer of pipeline computing in the on-chip memory;
Step 5: determining the quantity of layers of pipeline computing according to step 2, applying for the processing element according to step 3, reading the feature map stored in the on-chip memory in step 4 and performing pipeline computing, storing the output feature map of the last layer of pipeline computing in the on-chip memory according to step 4, releasing a processing element corresponding to a layer at which pipeline computing is completed, and repeating the above process until pipeline computing is completed at all layers of the entire neural network.

2. The method according to claim 1, wherein the value of the output feature map of the last layer of pipeline computing does not exceed the capacity of the on-chip memory.

3. The method according to claim 2, wherein a processing element that is not used for pipeline computing or that is released can be configured to store a weight that needs to be preloaded at a layer at which computing is to be performed.

4. The method according to claim 3, wherein the minimum value of the output feature map in the neural network appears at a predetermined layer.

5. The method according to claim 4, wherein layers having minimum values of the output feature map in the neural network are spaced by a same quantity of layers.

6. The method according to claim 5, wherein if MobileNet-YOLOv3 is used as a neural network model, the layers having minimum values of the output feature map in the neural network are spaced by three layers.

7. The method according to claim 4, wherein layers having minimum values of the output feature map in the neural network are spaced by different quantities of layers.

8. A neural network accelerator using only on-chip memory, comprising:
a controller, configured to send a control instruction to a loading module, a computing array, a post processing module, and a storage module;
the loading module, configured to load a feature map and a weight from an on-chip buffer to a computing array according to the control instruction;
the computing array, comprising multiple processing elements, wherein the computing array receives, according to the control instruction, the feature map and the weight outputted from the loading module, and outputs a computing result to the post processing module or the storage module;
the post processing module, configured to: receive the computing result according to the control instruction, perform post processing, and output a processing result to the storage module;
the storage module, configured to store an output feature map in an on-chip buffer according to the control instruction, wherein the output feature map is a computing result or a processing result, and a value of the output feature map does not exceed a storage capacity of the on-chip buffer; and
the on-chip buffer, configured to: store the feature map, wherein after a quantity of layers of pipeline computing and a quantity of processing elements are determined again, a processing element is applied for, the loading module reads the output feature map and a weight in the on-chip buffer to the computing array according to the control instruction delivered by the controller, the storage module stores the computed output feature map in the on-chip buffer according to the control instruction delivered by the controller, a processing element corresponding to a layer at which pipeline computing is completed is released, the above process is repeated until pipeline computing is completed at all layers of the entire neural network, and a final result is outputted.
